Europäisches Patentamt

European Patent Office

Office européen des brevets

(11) Publication number: **0 171 511**
**B1**

(12) **EUROPEAN PATENT SPECIFICATION**

(45) Date of publication of patent specification: **18.10.89**

(51) Int. Cl.⁴: **B 05 B 7/04,** B 05 B 12/00

(21) Application number: **85104921.3**

(22) Date of filing: **23.04.85**

(54) Method and apparatus for controlling the gas content of dispensed hot melt thermoplastic adhesive foam.

(30) Priority: **30.05.84 US 615218**

(43) Date of publication of application:
**19.02.86 Bulletin 86/08**

(45) Publication of the grant of the patent:
**18.10.89 Bulletin 89/42**

(84) Designated Contracting States:
**BE CH DE FR GB IT LI**

(56) References cited:
EP-A-0 059 603
US-A-4 059 466
US-A-4 059 714
US-A-4 200 207
US-A-4 301 119
US-A-4 376 172

(73) Proprietor: **NORDSON CORPORATION**
**555 Jackson Street P. O. Box 151**
**Amherst Ohio 44001 (US)**

(72) Inventor: **Klein, Richard G.**
**340 Greenbriar Drive**
**Avon Lake Ohio 44012 (US)**
Inventor: **Schmitkons, James W.**
**588 Middle Ridge Road**
**Lorain Ohio 44053 (US)**

(74) Representative: **Eisenführ & Speiser**
**Martinistrasse 24**
**D-2800 Bremen 1 (DE)**

Courier Press, Leamington Spa, England.

## Description

This invention relates generally to hot melt thermoplastic adhesive dispensing systems and, more particularly, concerns systems for dispensing hot melt thermoplastic adhesive foam. The invention is more specifically related to such systems in which the gas content of the hot melt adhesive foam is controlled.

Hot melt thermoplastic adhesives are used in a number of applications such as packaging and product assembly. If the hot melt adhesive is applied as a cellular foam rather than as a non-foamed adhesive, certain improved characteristics are obtained, such as increased bonding strength and a longer "open" time during which the adhesive retains its bonding strength after being applied to a substrate. The details of a number of hot melt thermoplastic adhesive foam systems are set forth in U.S. Patents No. 4,059,466 to Scholl et al, No. 4,059,714 to Scholl et al, and No. 4,200,207 to Akers et al, all commonly assigned herewith.

In an exemplary foamed hot melt adhesive system, a dual stage gear pump supplies an adhesive and gas solution to an adhesive dispenser, or gun. The gun contains a valve at an outlet nozzle through which the solution is dispensed to atmospheric pressure. When the solution is dispensed, the gas is released from solution to become entrapped in the adhesive to form a foam on a substrate to which the adhesive is applied.

In the foregoing description, and throughout this specification and the claims, the term "solution" is used to describe the liquid adhesive/gas dispersion supplied under high pressure to the gun, which dispersion when dispensed from the gun at atmospheric pressure cools and creates a foamed adhesive. The applicants are of the view that this mixture is a true solution in which the molecules of the dissolved gas are dispersed among those of the liquid adhesive. The term "solution", though, as used in the specification and the claims of the application is intended to encompass the broader generic definition of solution which is a gas homogeneously mixed with the molten liquid adhesive, whether or not the molecules of the dissolved gas are in fact dispersed among those of the solvent.

In the above-mentioned exemplary dual stage gear pump system, adhesive is supplied from a hot melt adhesive source to the first stage of the gear pump, and a suitable gas, such as nitrogen, carbon dioxide, or air, is introduced at the inlet of the second stage of the pump together with the adhesive discharged from the first pump stage. Typically, the pump capacity of the second stage is greater than that of the first stage, such as by a factor of 50%, so that the gas is substantially drawn into solution with the adhesive. When the adhesive and gas solution is output from the second pump stage, it is coupled to the gun for dispensing through the gun valve.

In order to permit continuous operation of the pump, and to facilitate homogeneous mixing of the gas with the adhesive, when the gun valve is closed, the adhesive and gas solution is recirculated from the gun back to the inlet of the first pump stage. Preferably, when the gun valve is open for dispensing the adhesive and gas solution, a portion of the solution (such as 75%, for example) is recirculated. New raw adhesive is introduced at the first pump stage inlet as necessary to replace adhesive dispensed from the gun. A recirculation valve is present in the recirculation loop in order to establish the degree of recirculation. In one form of foamed hot melt system, the recirculation valve is a pressure regulator which maintains the adhesive and gas solution at the gun at a constant pressure.

In the above-described system, if the adhesive and gas solution is recirculated for a period of time with the gun valve closed, gas continues to be introduced into the adhesive, so that the gas content of the adhesive increases. If the gas content of the adhesive and gas solution is allowed to increase without limit, the quality of the foamed adhesive from the dispensing gun can become unacceptable. In some cases, during dispensing of a very high gas content adhesive solution, gas may be released from the adhesive at the nozzle causing sputtering.

In order to avoid the problems caused by the presence of excess gas in the hot melt adhesive and gas solution, it has been proposed to control a gas valve in the gas line between the gas supply and the adhesive pump. This control valve is turned off whenever the gun is turned off, stopping the flow of gas to the pump.

The gas content of the adhesive and gas solution decreases, however, when the system is in a strictly recirculation mode, with the gun valve and the gas valve closed, due apparently to gas leakage from the pump, such as along the pump shafts and at the inlet to the first pump stage. It has, therefore, also been proposed in the past to open the gas valve occasionally when the gun is off for extended periods of time in order to keep the gas content of the solution from becoming too low.

In this prior control system, which is disclosed in EP—A—0059063 and constitutes the closest prior art, the gas valve is also opened during initial start up of the foamed hot melt adhesive system, such as for the first two or three minutes of system operation.

This prior approach to controlling the gas content of the adhesive and gas solution suffers from the drawback that the gas flow is controlled only to an approximation of the amount necessary to produce foamed adhesive of proper quality. Further, even if the quality of such a system is acceptable in steady state conditions, this prior approach does not deal with the difficulties of initializing the hot melt system each time it is operated from a cold startup condition. Typically, with such a prior system, the operator of the foamed adhesive dispenser must adjust, by observation, various system parameters to obtain the proper foaming of the adhesive which is dispensed from the gun. For example, the operator may have adjustments for setting the gear pump drive, controlling the cycling of the gas valve, setting the pressure drop of the recirculation valve, and regulating the gas flow rate and pressure. Since adjusting any of these parameters affects the other parameters, initial setup of such a foamed hot melt system can require several iterations of adjusting the various system parameters before the desired quality of hot melt foam is obtained.

It is consequently an object of the present invention to provide a foamed hot melt adhesive system in which the gas content of the adhesive and gas solution is controlled to provide a readily obtainable good quality of dispensed foamed adhesive. It is a related object of the invention to provide such a system in which the setup procedure permits arriving at the optimum quality foamed adhesive easily and accurately.

While initially it would appear that measurement and control of the gas content of the adhesive and gas solution is relatively straightforward, this is not the case. The hot melt adhesive and gas solution supplied from the adhesive pump outlet to the gun is typically at a high pressure, such as in the range of 55—100 bar (800—1,500 psi), and the gas is forced into solution with the adhesive. Due to the pressures involved, a straightforward densitometer reading of the adhesive and gas solution coupled from the pump to the gun yields density values which vary only a very small amount over a fairly large range of variations in the gas content of the solution.

Measuring the density of the foamed adhesive after it has been dispensed from the gun is generally impractical since, in most systems, the foamed adhesive is dispensed onto moving substrates, and therefore the foamed adhesive is not readily available for a straightforward densitometer reading.

As a result of the difficulties in measuring density directly, and in accordance with one aspect of the present invention, in the present foamed hot melt system a measurement is made of a parameter other than density whose value is indicative of the gas content of the adhesive and gas solution. In the illustrated form of the invention, a measurement is made, in the flow path between the pump outlet and the gun, of the pressure drop due to the flow of the solution through a restricted orifice in a movable slug in this flow path. This pressure drop is proportional to the mathematical product of (a) the mass flow rate of the solution from the pump and (b) the viscosity of the solution.

The mass flow rate and the viscosity of the solution from the pump are inversely proportional to the percentage of gas in the solution and consequently the product of these two quantities is also inversely proportional to the gas content. Therefore, the differential pressure which is measured across the restricted orifice slug has a determinable correlation to the gas content of the solution. This differential pressure is used to control a valve in the gas line from the gas source to the pump in order to control the addition of gas to the solution on a closed loop servo control basis. As the gas content of the solution falls, the pressure differential at the slug sensor increases, and a control circuit coupled to the sensor activates the valve in the gas line to add gas to the solution.

In a typical foamed hot melt system, the hot melt adhesive is supplied to the first stage of a two stage gear pump through gravity feed from a heated, unpressurized, adhesive tank. Consequently, the pressure at the inlet to the first stage of the gear pump is only slight above atmospheric pressure. The pressure at the inlet to the first pump stage may be, for example, as low as 1,4 bar (20 psi). Since the adhesive and gas solution from the outlet of the second stage of the pump is recirculated to the first stage inlet, through a restriction device or pressure regulator, the pressure of the solution in the portion of the recirculation path from the regulator to the return inlet at the first stage of the pump is at a relatively low pressure.

In employing a pressure drop slug sensor as described above, it has been observed that the predominant variable related to the pressure drop at the sensor is the mass flow rate of the adhesive and gas solution. Apparently the reason for this is that due to the low pressure in the recirculation path between the regulator and the inlet of the first pump stage, the recirculated adhesive is partially "foamed"; the gas is beginning to come out of solution due to the relatively low pressure at the pump inlet. Therefore, the amount of adhesive mass that is "bitten off" by the first stage of the gear pump is less than the amount which would be drawn in from a pure raw adhesive source. The first stage of the gear pump is, in effect, a metering stage since no more adhesive mass can be introduced through the pump than that introduced at the first stage inlet. Thus the mass flow rate through the gear pump, and exiting the second stage of the gear pump, decreases as the gas content increases. More gas can, however, be introduced at the inlet to the second pump stage.

As the percentage of gas in the hot melt adhesive and gas solution (exiting the second stage outlet of the pump) increases, the mass flow rate of the pump decreases, for a constant pump speed. The outlet pressure produced by the pump, such as in the above-mentioned range of 55—100 bar (800—1,500 psi), is sufficient at the outlet of the second pump stage to maintain the gas in a compressed form in solution in the adhesive, and the density of the solution does not change substantially with changes in gas content. However, there is a variation in the mass flow rate of the pump which is produced by the metering action at the first stage where almost-"foamed" adhesive is recirculated to the first stage inlet. It is presently believed that, in observed forms of hot melt adhesive systems constructed in accordance with the present invention, the effect of the just-described flow rate variation upon the pressure differential at the slug sensor is about four or five times the effect of viscosity changes.

Due to the employment of the pressure differential slug sensor in the presently illustrated hot melt system, the system can be readily set up for optimum foamed adhesive production regardless of lengths of time during which the gun valve is closed and the adhesive solution recirculated. To do this, the operator runs the system with the gun open to obtain a desired foamed adhesive output in an initial run, as selected by observation of the dispensed foamed adhesive. The pressure drop across the restricted orifice slug is measured and noted or electronically stored at this time. Subsequently, when the gun is off, a servo system coupled from the sensor to a gas line valve utilizes this stored pressure drop value to control the flow rate of gas into the solution in order to maintain the pressure differential at the optimum value stored earlier during dispensing of adhesive solution from the gun. The precise manner in which the gas valve is controlled is subject to choice. For example, an on/off system may be used wherein a reduction of the differential pressure across the slug beyond a certain amount results in activation of the gas valve to introduce more gas into the adhesive and gas solution at the inlet to the second pump stage. Alternatively, a proportional control may be used in order to minimize overshoot and undershoot about the selected differential pressure, which would otherwise be produced by "hunting" of the control.

It should be noted that when such a servo loop is employed for controlling the gas flow rate, the need for precise gas pressure regulation and gas flow rate measurement is eliminated. Since the gas flow rate control servo loop operates to provide the requisite gas content of the solution, regardless of the particular gas supply pressure or valve opening, there is no need to precisely measure the flow rate, for example, by using a precision meter.

The differential pressure at the slug sensor is affected not only by factors related to the gas content of the hot melt solution, but also by factors which are not so related. Variation of the pump speed alters the flow rate of the adhesive and gas solution in a manner generally unrelated to the gas content of the solution. Variation of the temperature of the solution alters the viscosity of the solution in a manner generally unrelated to the gas content of the solution.

In one embodiment of the present invention, a closed loop system is provided in which the pressure drop across a restricted orifice slug is sensed on a continuous basis and in which the "set point" pressure drop is changed to a new optimum value if the pump speed or the adhesive temperature changes. One way to calibrate this type of system is to use a control circuit or microprocessor and to conduct one or more initial "teaching" runs to establish the operating parameters of the system. Thereafter, if the pump speed or the temperature should change, the control circuit calculates, or interpolates from a set of tabular values, the requisite "set point" differential pressure needed to maintain the gas content of the adhesive and gas solution at the desired level.

In initializing such a control system, the hot melt pump is operated at a certain speed, such as in a "fast" mode, and the pressure drop of the restricted orifice slug and the hot melt solution temperature are noted when the properly foamed hot melt adhesive is dispensed. The pump speed is then reduced to a "low" speed and a new pressure differential and adhesive temperature measured at this alternative operating condition. The two pump speeds and their related pressure drops are used to approximate a linear relationship of pressure drop versus pump speed. Based upon this approximated relationship, interpolation between the measured points can be used to select the appropriate "set point" pressure drop for other pump speeds.

The temperature of the hot melt solution changes when the pump speed changes due to the difference in required energy input into the hot melt solution to move the solution at the different flow rates resulting from the different pump speeds. For example, in some systems, a temperature differential attributable to a pump speed change in the range of 11—14°C (20—25°F) has been observed.

There is a known exponential relationship between the viscosity of the adhesive and gas solution and the temperature of the solution. This relationship is taken into account in the present system to compensate for viscosity changes with temperature, and their consequent effect upon the pressure differential sensed by the restricted orifice slug sensor. Depending upon the degree of accuracy required, the pump speed versus pressure drop relationship may be adjusted based upon the known relationship between viscosity and temperature, or the effect of such viscosity changes may be approximated.

Other objects and advantages of the invention, and the manner of their implementation, will become apparent upon reading the following detailed description and upon reference to the drawings, in which:

Figure 1 is a diagrammatic illustration of an embodiment of an improved adhesive foam dispensing system in accordance with the present invention;

Figure 2 is a diagrammatic illustration of a first pressure differential sensor for the system of Figure 1;

Figure 3 is a diagrammatic illustration of an alternative pressure differential sensor for the system of Figure 1;

Figure 4 is a diagrammatic illustration of a servo control loop for the system of Figure 1;

Figure 5 is a diagrammatic illustration of an alternative control loop for the system of Figure 1;

Figure 6 is an idealized graphical representation of the relationship between hot melt solution flow rate and the percentage of gas in the hot melt adhesive and gas solution; and

Figure 7 is an idealized graphical representation of the relationship between the hot melt viscosity and the percentage of gas in the hot melt adhesive and gas solution.

While the invention is susceptible to various modifications and alternative forms, certain illustrative embodiments have been shown by way of example in the drawings and will herein be described in detail.

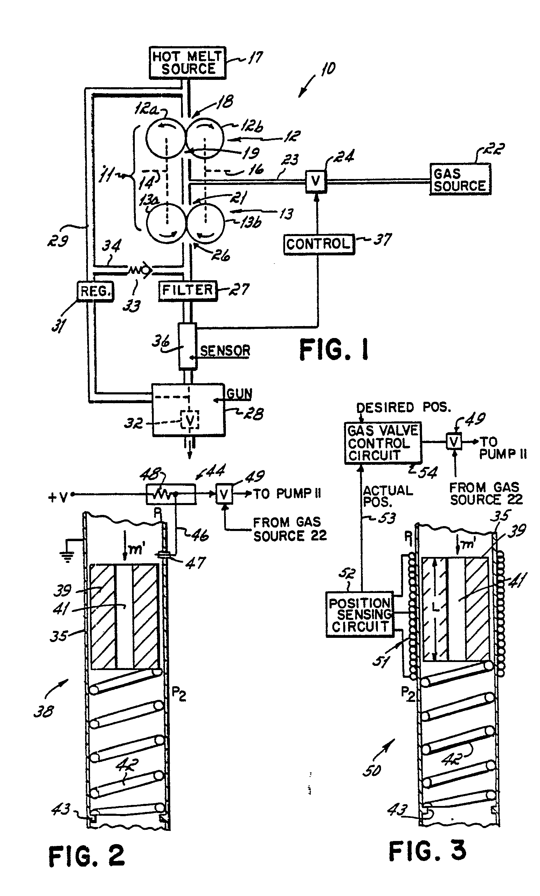

With initial reference to Figure 1, a foamed hot melt adhesive dispensing system arranged in accordance with the present invention includes a two-stage gear pump 11 having a first stage 12 and a second stage 13. Each stage includes oppositely rotating and meshed gear pairs 12a, 12b and 13a, 13b, respectively. The driven gears 12a, 13a of each stage are connected by a common drive shaft 14 and the idler gears 12b, 13b of each stage are connected by a common idler shaft 16. Molten hot melt adhesive is introduced from a hot melt source 17, typically by gravity feed at atmospheric pressure, into the low pressure inlet 18 of the first stage 12 of the gear pump. The adhesive is delivered at the outlet 19 of the first stage 12 at a metered rate, and the adhesive is introduced into the inlet 21 of the second stage 13 of the pump 11. Gas is supplied from a gas source 22 into the inlet 21 of the second stage 13 of the pump 11 through a gas line 23. The gas may be, for example, nitrogen, air, or carbon dioxide, and the gas is supplied in the line 23 through a gas valve 24, the operation of which will be described in more detail hereinafter.

The gas from the line 23 and the adhesive from the outlet 19 of the first pump stage 12 are intimately mixed in the second stage 13 of the gear pump 11. This mixing places the gas and the adhesive under such pressure that the gas goes into solution with the molten adhesive to provide a molten adhesive and gas solution. This solution is ejected from the outlet 26 of the second stage 13 of the pump 11 and coupled through a filter 27 to a valved adhesive dispensing gun 28.

A recirculation path 29 couples the adhesive and gas solution from the outlet 26 of the pump 11 to the inlet 18 of the first stage 12 of the pump. During normal operation of the system, the solution of adhesive and gas from the second stage outlet 26 is coupled through the filter 27 and the body of the dispensing gun 28, via a pressure regulator 31 and the recirculation line 29, to the inlet 18 of the first stage of the pump. The gun 28 includes a valve 32 which is opened and closed to dispense the adhesive and gas solution onto a substrate. A portion, such as for example 75%, of the solution is recirculated through the regulator 31 and the path 29 when the gun valve 32 is open, and the other 25% of the flow from the pump is dispensed through the gun. When the gun valve 32 is closed, all of the adhesive and gas solution from the outlet 26 of the pump 11 is recirculated through the recirculation path 29, with the pressure regulator 31 maintaining the pressure at the gun 28 at a substantially constant level in a range of, for example, 55—100 bar (800—1,500 psi).

In the event of a blockage beyond the outlet 26 of the second stage 13 of the pump, such as in the filter 27 or the gun body 28, the resultant pressure buildup at the outlet 26 results in the opening of a pressure relief valve 33 in a pressure relief path 34 which couples the solution from the pump outlet to the recirculation line 29.

In accordance with the present invention, a parameter of the adhesive and gas solution is sensed and used to control the flow of gas through the valve 24. In the illustrated form of the invention, a sensor 36 is positioned in the flow path of the solution between the filter 27 and the gun 28. A control circuit, indicated generally as 37, is responsive to the sensor 36 to open and close the gas valve 24.

As shown in Figure 2, in one illustrated form of the invention the sensor 36 takes the form of a transducer, or differential pressure measuring device, 38 in the flow line of the adhesive and gas solution. The device 38 includes a movable slug 39 positioned in the solution flow path and having an orifice 41 therethrough. The pressure drop across the slug 39 due to flow through the restricted orifice 41 is proportional to the gas content of the adhesive and gas solution. The transducer device 38 further includes a spring 42 for opposing movement of the slug 39 in the direction of flow of the solution. One end of the spring 42 bears against a suitable stop 43 in the flow conduit, and the other end of the spring 42 bears against the slug 39. At a constant flow rate, the position of the slug is a function of the pressure drop across it. This pressure drop is in turn a function of the gas content of the solution. Therefore, by monitoring the position of the slug, an indication of the gas content of the adhesive and gas solution is obtained.

In a steady state condition, there is a net force urging the slug 39 downwardly, as shown in Figure 2, due to the pressure differential across the slug. In this steady state condition, the downward force is balanced by an opposing spring force produced by the compressed spring 42. Since the spring force increases with the compression of the spring 42, by an amount dependent upon the spring constant, the position of the slug 39 is indicative of the spring force, and of the opposite but equal force due to the pressure differential across the slug 39.

As shall be discussed in more detail hereinafter, as the gas content of the adhesive and gas solution increases, the pressure drop across the slug 39 decreases. As the pressure differential decreases, the slug 39 moves upwardly, as shown in Figure 2, untensioning the spring 42 until the spring force again balances the force on the slug produced by the pressure differential.

This movement of the slug 39 dependent upon the pressure differential may be employed with a control system 44, as illustrated in Figure 2, to regulate the gas content of the adhesive and gas solution. The control system 44 includes an electrically conductive probe 46, the tip of which extends into the flow channel 35 of the hot melt solution. The flow channel 35 is electrically conductive as are the slug 39 and the spring 42. The channel 35 is connected to an electrical ground, and the probe 46 is inserted through the wall of the channel 35 inside a suitable electrically insulating fluid seal 47.

The control system 44 further includes a resistor 48 coupled between a voltage source +V and the probe 46. The side of the resistor 48 connected to the probe 46 is also coupled to an electrically controlled valve 49, such as a solenoid valve, embodying the valve 24 of Figure 1 in the gas line. When the slug 39 contacts the probe 46, the probe is electrically grounded through a circuit path including the slug 39, the spring 42, and the conduit 35. When the slug 39 is not in contact with the probe 46, the probe is at a potential established by the voltage source +V, and this voltage is coupled to the solenoid valve.

In operation, when the gas content of the adhesive and gas solution is below a selected maximum level, the slug 39 is spaced apart from the probe 46, and voltage is applied to the solenoid valve 49. The solenoid valve 49 is in turn activated by the applied voltage to an open condition wherein gas is coupled from the gas source 22 to the gear pump 11. Once the gas content of the solution has risen to the selected level, the slug 39 moves upwardly, into contact with the probe 46, grounding the probe and removing the applied voltage from the solenoid valve 49. The valve then closes, stopping the flow of gas from the gas source to the pump.

As the adhesive and gas solution is dispensed through the valve 32 of the gun 28 (Figure 1), the gas content of the solution decreases due to the introduction of raw hot melt adhesive from the hot melt source 17 into the system. Even in the absence of operation of the gun 28, due to gas leakage the gas content of the solution decreases. When the gas content of the adhesive and gas solution has decreased sufficiently to increase the pressure drop across the slug 39, the slug moves downwardly out of contact with the probe, and the solenoid valve 49 is again activated to add gas to the solution. The sensor 38 and the control system 44 shown in Figure 2 consequently serve as a closed loop servo control to maintain a desired gas concentration in the adhesive and gas solution of the hot melt system 10.

A further improvement in the control technique may be obtained if the position of the slug is sensed continuously. In this case, a measure of the slug position is used to control the gas content of the solution on a continuous basis, such as through the use of a proportional controller. In implementing such a control system, it can be shown that the pressure differential across the slug 39 is related to the mass flow rate m' of the hot melt solution through the conduit 35, and the viscosity u of the adhesive and gas solution, by the following expression:

(1) $P_1 - P_2 = Km'u$

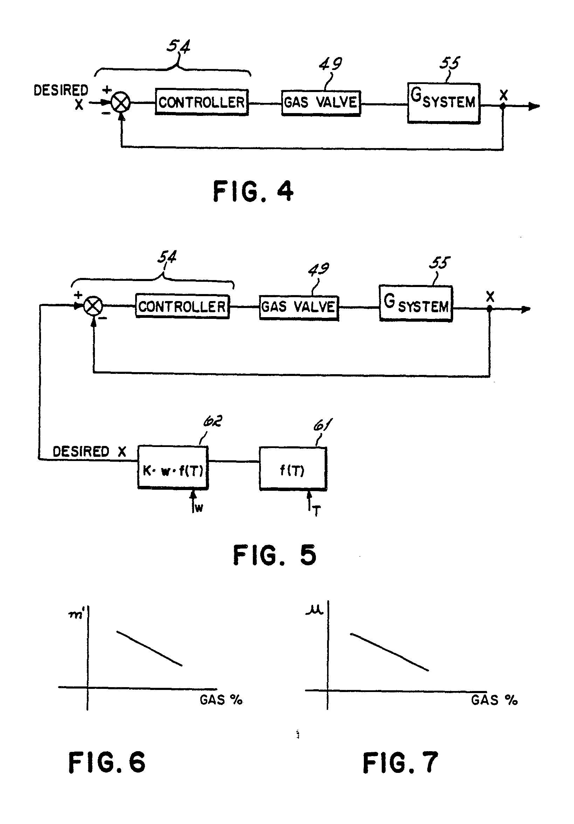

In this expression, K is a constant of proportionality, and $P_1 - P_2$ is the pressure drop across the slug 39. As shown in idealized form in Figures 6 and 7, the mass flow rate m' and the viscosity u, such as are sensed by a differential pressure sensor in the conduit 35, each decrease as the percentage of gas in the adhesive and gas solution increases. Consequently, viewing the relationship of Equation 1, since the pressure differential is proportional to the product of m' and u, the differential pressure also decreases as the percentage of gas in the solution increases. The differential pressure across the slug 39 is also related to the slug position by the following expression:

(2) $P_1 - P_2 = kx/A$

In Equation 2, k is the spring constant of the spring 42, A is the cross-sectional area of the conduit, and x is the displacement of the slug in a direction to compress the spring, measured from the point at which the slug is in contact with the spring but before the spring is compressed. In practicing the present control technique, the term "A" is, as stated, the cross-sectional area of the conduit. In theory, for greater precision than is presently required, the term "A" would represent an area slightly less than the cross-sectional area of the conduit due to fluid flow between the slug and the conduit wall.

The position of the slug may therefore be related to the flow rate m' and the viscosity u of the solution, and hence to the percentage of gas in the solution, by the expression:

(3) $x = (K/k)Am'u$

Therefore, if means are provided to monitor the slug position x, a signal indicative of this position can be used to control the flow rate of the gas from the gas source 22 to the gear pump 11 in the system 10 of Figure 1.

An illustrative system for accomplishing such control is shown in Figure 3. In Figure 3, the conduit 35, the slug 39, the orifice 41 in the slug, the spring 42, and the spring stop 43 are present as in the sensor arrangement of Figure 2. However, in Figure 3, the differential pressure sensor 50 includes a pick-up coil 51 wrapped around, and electrically insulated from, the conduit 35, with a tap and the ends of the coil 51 being electrically connected to a slug position sensing circuit 52. A variety of sensing circuits 52 may be employed, typically including circuitry which produces a slug position signal based upon inductance variations in the coil 51. The inductance of the coil 51 changes in dependence upon the position of the slug 39, which acts as a movable "core" for the coil. Exemplary magnetic core position sensing arrangements for use in fluid flow measurement are shown, for example, in Patent No. 2,936,614 to Godbey and Patent No. 3,931,737 to Conkling et al. Alternatively, the position of the slug 39 could be determined by optical or capacitive pick-ups or the like.

In the control arrangement illustrated in Figure 3, the actual slug position signal developed by the slug position sensing circuit 52 is coupled on a line 53 to a gas valve control circuit 54. The gas valve control circuit 54 also receives a desired slug position signal, such as from a potentiometer or switch setting. This desired slug position setting is selected by the system operator based upon a trial run of the hot melt system wherein an acceptable quality foamed hot melt adhesive is dispensed at that setting. The gas valve control circuit 54 then controls the solenoid valve 49 to regulate the input of gas from the gas source 22 to the pump 11 as the hot melt system operates, whether the adhesive dispensing gun valve is open or closed.

The control system 50 is shown in the form of a servo control diagram in Figure 4. The gas valve control circuit 54 comprises a summing junction and a controller which operates the gas valve 49. The response of the system to the gas from the gas valve 49 is represented by the transfer function 55. As the actual position x of the slug 39 varies from the desired position, the control circuit 54 regulates the flow of gas through the gas valve 49 to return the slug to the desired position.

In implementing the control systems of Figures 2 and 3, it is necessary to maintain the temperature of the hot melt adhesive solution and the speed of the pump constant. In this way, variations in flow rate and viscosity are substantially due only to variations in the gas content of the adhesive and gas solution. In some cases, it may be desired to operate the pump at different speeds, such as in running the hot melt system 10 in a gear-to-line mode. In a gear-to-line mode, the pump is operated at a speed related to the speed of movement of substrates past the dispensing gun, which speed varies. If the pump speed is varied, the amount of shear work performed on the hot melt adhesive material varies, and this in turn causes variations in the temperature of the material.

With reference to the pressure differential sensor 50 of Figure 3, for example, and assuming Hagen-Pouselle flow through the slug 39, the differential pressure may be stated as:

$$(4) \qquad P_1 - P_2 = (8uLm')/(aR^2)$$

In this expression, u is the viscosity of the adhesive and gas solution, L is the length of the slug 39, m' is the mass flow rate of the solution, a is the effective cross sectional area of the orifice 41 of the slug 39, and R is the radius of the orifice 41. The pressure differential across the slug 39 is also equal to the spring force divided by the effective area upon which the pressure works:

$$(5) \qquad P_1 - P_2 = (kx)/A$$

In Equation 5, as in the earlier Equations 2 and 3, k is the spring content of the spring 42, A is the cross-sectional area of the conduit, and x is the displacement of the slug 39 from a position in which the slug is in contact with the spring and the spring is uncompressed.

For a material having a constant percentage of gas, the pump output is proportional to the pump speed:

$$(6) \qquad m' = Bw$$

In Equation 6, B is a proportionality constant and w is the angular rotational speed of the pump.

The viscosity-temperature dependence of the adhesive and ga solution may be represented as:

$$(7) \qquad u = u_0 e^{-b(T-T_0)},$$

where $u_0$ and $T_0$ are representative of a base condition of viscosity and temperature, and b is a proportionality constant.

Combining Equations 4, 5, 6 and 7 yields the following expression:

$$(8) \qquad x = [(8LABu_0)/(aR^2k)]we^{-b(T-T_0)}$$

In Equation 8, the terms within brackets comprise hardware parameters (L, A, R, k and a), a process parameter (B), and a material parameter $(u_0)$. For a given hardware/material configuration, the parameters within the brackets remain substantially constant. Therefore, the slug position x as a function of temperature and pump speed may be expressed as follows:

$$(9) \qquad x(w,T) = [x(w_0,T_0/w_0][w][e^{-b(T-T_0)}]$$

In Equation 9, x $(w_0,T_0)$ is the slug position at a reference or "teaching" condition of temperature and pump speed, x (w,T) is the "desired" slug position at some other pump speed and .674temperature.

Equations 8 and 9 may serve as the basis for hypothesizing control algorithms for the gas control loop. In using Equations 8 and 9, the proportionality constant b may be selected at a nominal value for the particular adhesive employed or as an approximation for the different types of adhesives which might be used. The proportionality constant b may also be calculated by measuring the slug position, temperature, and pump speed at a second "teaching" condition. Equation 9 may then be solved for b by inserting the observed values of x, w and T at the second "teaching" condition of the hot melt system.

As shown in Figure 5, a closed loop servo control which implements Equations 8 and 9 includes a control circuit 54, a gas valve 49, and a system transfer characteristic 55 similar to that shown in Figure 4. In the system illustrated in the diagram of Figure 5, however, instead of inputting a selected desired slug position x to the control circuit 54, circuits 61 and 62 implement Equations 8 and 9 to vary the "desired" x dependent upon system conditions.

The first bracketed term of Equation 9 may be designated M, established from the "teaching" condition of the system, and the third bracketed term of Equation 9, the viscosity-temperature dependence term, may be designated f(T). In this case, Equation 9 then becomes:

$$(10) \qquad x(w,T) = Mwf(T)$$

As shown in Figure 5, the temperature of the adhesive and gas solution, which may be measured, for example, at the gun 28, is input to the circuit 61 and f(T) determined therefrom. This value is coupled to the circuit 62, which also receives a measure of the pump speed w. In the block 62, the constant K (stored in the circuit 62 from a "teaching" run of the system) is multiplied by the measured pump speed w and the temperature term f(T) to produce the desired slug position signal x. The control circuit 54 uses this "desired" slug position, and the "actual" slug position, to control the gas valve 49 in a manner to maintain the actual slug position equal to the instantaneously calculated desired slug position.

The functions of the control circuit 54 and of the circuits 61 and 62 may be combined, for example, in a single microprocessor-based control circuit. After an operator sets up one or more "teaching" conditions for the system, the sets of data at these conditions are used for calculating the constant terms stored for the desired slug position calculation. The processor-based control circuit thereafter monitors the adhesive and gas solution temperature and pump speed to continuously adjust the desired value of the slug position x over a range of pump speeds and temperatures in the hot melt adhesive dispensing system. In like manner, other system variables not related to the gas content of the hot melt solution may be accommodated by appropriate adjustment of the desired slug position value.

**Claims**

1. Apparatus for controlling the gas content of dispensed hot melt thermoplastic adhesive foam comprising:

means (17) for supplying heated thermoplastic adhesive material in a molten state at an outlet;

means (22) for supplying gas at an outlet;

means (11), coupled to the adhesive material supplying means outlet and to the gas supplying means outlet, for agitating and pressurizing the molten adhesive material in the presence of the gas to force the gas into solution with the molten adhesive material to form a molten adhesive and gas solution at an outlet (26), whereby a dispenser (28) may be coupled to the outlet of the agitating and pressurizing means for dispensing the molten adhesive and gas solution at a reduced pressure so that the gas is released from solution and forms a dispensed adhesive foam and

means (24, 27; 49, 54) for controlling the flow of gas from the gas supplying means to the agitating and pressurizing means characterized by

means (36; 38; 50) for sensing a parameter of the molten adhesive and gas solution indicative of the gas content of the solution and for producing an output dependent upon said sensed parameter, said sensed parameter preferably being the differential pressure of the flow of said solution through a restricted orifice

and means (37; 44; 54), coupled to the parameter sensing means and to the gas supplying means for actuating said gas flow control means dependent upon said parameter sensing means output.

2. The apparatus of claim 1 in which the agitating and pressurizing means (11) has an inlet (18) coupled to the adhesive material supplying means outlet, and further comprising a recirculation path (29) coupling the outlet (26) of the agitating and pressurizing means to the inlet (18) of the agitating and pressurizing means.

3. The apparatus of claim 2 which further comprises means (31) for reducing the pressure in the recirculation path between the outlet (26) of the agitating and pressurizing means and the inlet (18) of the agitating and pressurizing means.

4. The apparatus of claim 3 in which the agitating and pressurizing means comprises a pump (11) operable to pump volumetrically metered amounts of molten adhesive material and molten adhesive and gas solution from the inlet (18) to the outlet (26) of the agitating and pressurizing means and in which the parameter sensing means (36; 38; 50) comprises means for sensing a parameter at least partially dependent upon the flow rate of the adhesive and gas solution from said outlet (26).

5. The apparatus of claim 4 in which the parameter sensing means (36; 38; 50) comprises means for sensing a parameter dependent upon both the flow rate and the viscosity of the molten adhesive and gas solution formed at the outlet (26) of the agitating and pressurizing means.

6. The apparatus of claim 1 or 5 in which the parameter sensing means (36; 38; 50) comprises means for sensing a pressure differential across a restrictor (41) along a flow path of the molten adhesive and gas solution.

7. The apparatus of claim 1 in which the differential pressure sensing means (36; 38; 50) comprises (a) a movable slug (39) having an orifice (41) therethrough positioned in a flow path of the molten adhesive and gas solution and (b) means (44, 46, 47) for producing said differential pressure sensing means output dependent upon the position of the slug in the flow path.

8. The apparatus of claim 7 in which the controlling means (24, 37; 49, 54) comprises means for comparing the output of the differential pressure sensing means, indicative of the slug position, to a desired slug position and for controlling the gas supplying means to couple gas to the agitating and pressurizing means dependent upon said comparison.

9. The apparatus of claim 8 in which the agitating and pressurizing means comprises a variable speed pump, and further comprising means, coupled to the controlling means, for calculating a desired slug position dependent upon the pump speed.

10. A method for dispensing hot melt thermoplastic adhesive foam having a controlled gas content comprising the steps of:

agitating and pressurizing heated solid thermoplastic adhesive material in a molten state in the presence of a gas to force the gas into solution with the molten adhesive material to form a molten adhesive and gas solution;

controlling the flow of said gas into the presence of the adhesive material; and

dispensing the molten adhesive and gas solution at a reduced pressure so that the gas is released from solution and forms a dispensed adhesive foam, characterized by

sensing a parameter of the molten adhesive and gas solution indicative of the gas content of the solution preferably by sensing a differential pressure across a restriction along a flow path of the molten adhesive and gas solution

and by controlling the flow of said gas dependent upon said sensed parameter.

11. The method of claim 10 in which said controlling step comprises the substeps of:

comparing said sensed parameter to a setpoint parameter to produce a comparison signal; and controlling the gas flow dependent upon said comparison.

12. The method of claim 11 which further comprises, before said comparing and controlling substeps, the step of:

calculating a setpoint parameter to accommodate system variables which are substantially independent from the gas content of the molten adhesive and gas solution.

13. The method of any of claims 10—12 in which a desired slug position calculating means calculates a desired slug position which is also dependent upon the temperature of the molten adhesive and gas solution.

## Patentansprüche

1. Vorrichtung zur Regelung des Gasgehaltes von abgegebenem heißgeschmolzenem thermoplastischem Klebeschaum, welche umfaßt:

Mittel (17) zur Zuführung erhitzten thermoplastischen Klebematerials in geschmolzenem Zustand zu einem Auslaß;

Mittel (22) zur Zuführung von Gas zu einem Auslaß;

mit dem Auslaß der Mittel zum Zuführen von Klebematerial und dem Auslaß der Mittel zur Gaszuführung verbundene Mittel (11) zur Bewegung und Unterdrucksetzung des geschmolzenen Klebematerials in Gegenwart des Gases, um das Gas zur Lösung im geschmolzenen Klebematerial zu zwingen, um eine Lösung aus geschmolzenem Klebstoff und Gas an einem Auslaß (26) zu bilden, wobei eine Abgabevorrichtung (28) mit dem Auslaß der Bewegungs- und Unterdrucksetzungsmittel verbunden sein kann, um die Lösung aus geschmolzenem Klebstoff und Gas unter vermindertem Druck abzugeben, so daß das Gas aus der Lösung freigesetzt wird und einen abgegebenen Klebeschaum bildet; und

Mittel (24, 27; 49, 54) zur Regelung des Gasflusses von dem Mitteln zur Gaszuführung zu den Bewegungs- und Unterdrucksetzungsmitteln, gekennzeichnet durch

Mittel (36; 38; 50) zur Erfassung eines Parameters der Lösung aus geschmolzenem Klebstoff und Gas, der den Gasgehalt der Lösung anzeigt, und zur Abgabe eines Signals in Abhängigkeit von dem genannten erfaßten Parameter, wobei der erfaßte Parameter vorzugsweise der Differenzdruck des Lösungsflusses durch eine verkleinerte Öffnung ist,

und mit den Mitteln zur Parametererfassung und den Mitteln zur Gaszuführung verbundene Mittel (37; 44; 54), um die Mittel zur Regelung des Gasflusses in Abhängigkeit vom Signal der den Parameter erfassenden Mittel zu betätigen.

2. Vorrichtung nach Anspruch 1, bei welcher die Bewegungs- und Unterdrucksetzungsmittel (11) einen mit dem Auslaß der Mittel zur Zuführung von Klebematerial verbundenen Einlaß (18) aufweisen, die weiterhin eine Rückführleitung (29) aufweist, die den Auslaß (26) der Bewegungs- und Unterdrucksetzungsmittel mit dem Einlaß (18) der Bewegungs- und Unterdrucksetzungsmittel verbindet.

3. Vorrichtung nach Anspruch 2, die weiterhin Mittel (31) zur Druckverminderung in der Rückkehrleitung zwischen dem Auslaß (26) der Bewegungs- und Unterdrucksetzungsmittel und dem Einlaß (18) der Bewegungs- und Unterdrucksetzungsmittel aufweist.

4. Vorrichtung nach Anspruch 3, bei welcher die Bewegungs- und Unterdrucksetzungsmittel ein Pumpe (11) aufweisen, die betreibbar ist, um volumetrisch abgemessene Mengen geschmolzenen Klebematerials und einer Lösung aus geschmolzenem Klebstoff und Gas vom Einlaß (18) zum Auslaß (26) der Bewegungs- und Unterdrucksetzungsmittel zu pumpen, und bei welcher die Mittel (36; 38; 50) zur Erfassung des Parameters Mittel zur Erfassung eines Parameters umfassen, der wenigstens teilweise von der Flußrate der Lösung von Klebstoff und Gas aus dem genannten Auslaß (26) abhängig ist.

5. Vorrichtung nach Anspruch 4, bei welcher die Mittel (36; 38; 50) zur Erfassung des Parameters Mittel zur Erfassung eines Parameters umfassen, der sowohl von der Flußrate als auch von der Viskosität der Lösung aus geschmolzenem Klebstoff und Gas abhängt, die am Auslaß (26) der Bewegungs- und Unterdrucksetzungsmittel gebildet werden.

6. Vorrichtung nach Anspruch 1 oder 5, bei welcher die Mittel (36; 38; 50) zur Erfassung des Parameters Mittel zur Erfassung eines Differenzdruckes über einer Drossel (41) entlang einer Flußbahn der Lösung aus geschmolzenem Klebstoff und Gas aufweisen.

7. Vorrichtung nach Anspruch 1, bei welcher die Mittel (36; 38; 50) zur Erfassung des Differenzdruckes

a) einen beweglichen Verzögerungskörper (39) mit einer durchgehenden Öffnung (41), der in einer Flußbahn der Lösung aus geschmolzenem Klebstoff und Gas angeordnet ist, und

b) Mittel (44, 46, 47) zur Erzeugung des Signals der genannten Mittel zur Erfassung des Differenzdruckes in Abhängigkeit von der Stellung des Verzögerungskörpers in der Flußbahn aufweisen.

8. Vorrichtung nach Anspruch 7, bei welcher die Regelungsmittel (24, 37; 49, 54) Mittel zum Vergleich des die Stellung des Verzögerungskörpers anzeigenden Signals der Mittel zur Erfassung des Differenzdruckes mit einer vorbestimmten Stellung des Verzögerungskörpers und zur Regelung der Mittel zur Gaszuführung umfassen, um Gas zu den Bewegungs- und Unterdrucksetzungsmitteln in Abhängigkeit vom genannten Vergleich zuzuführen.

9. Vorrichtung nach Anspruch 8, bei welcher die Bewegungs- und Unterdrucksetzungsmittel eine geschwindigkeitsregelbare Pumpe und außerdem mit den Regelungsmitteln verbundene Mittel zur Berechnung einer gewünschten Stellung des Verzögerungskörpers in Abhängigkeit von der Pumpengeschwindigkeit umfassen.

10. Verfahren zur Abgabe von heißgeschmolzenem thermoplastischem Klebeschaum mit einem geregelten Gasgehalt, welches folgende Schritte aufweist:

Bewegung und Unterdrucksetzen von erhitztem festem thermoplastischem Klebematerial in geschmolzenem Zustand in Gegenwart eines Gases, um das Gas zur Lösung im geschmolzenem Klebematerial zu zwingen, um eine Lösung aus geschmolzenem Klebstoff und gas zu bilden;

Regelung des Flusses des genannten Gases in die Gegenwart des Klebematerials; und

Abgabe der Lösung von geschmolzenem Klebstoff und Gas unter vermindertem Druck, so daß das Gas aus der Lösung freigesetzt wird und einen abgegebenen Klebeschaum bildet, gekennzeichnet durch

Erfassung eines Parameters der Lösung aus geschmolzenem Klebstoff und Gas, welcher den Gasgehalt der Lösung anzeigt, vorzugsweise durch Erfassung eines Differenzdruckes über einer Drossel entlang einer Flußbahn der Lösung aus geschmolzenem Klebstoff und Gas und durch Regelung des Gasflusses in Abhängigkeit vom erfaßten Parameter.

11. Verfahren nach Anspruch 10, bei welchem der Regelungsschritt folgende Einzelschritte umfaßt:

Vergleich des genannten erfaßten Parameters mit einem Sollwert-Parameter zur Erzeugung eines Vergleichssignals; und

Regelung des Gasflusses in Abhängigkeit von diesem Vergleich.

12. Verfahren nach Anspruch 11, welches weiterhin von den genannten Vergleichs- und Regelungs-Einzelschritten folgenden Schritt aufweist:

Berechnung eines Sollwert-Parameters zur Berücksichtigung von Systemvariablen, die im wesentlichen unabhängig vom Gasgehalt der Lösung aus geschmolzenem Klebstoff und Gas sind.

13. Verfahren nach einem der Ansprüche 10 bis 12, bei welchem Mittel zur Berechnung der gewünschten Stellung des Verzögerungskörpers eine gewünschte Stellung des Verzögerungskörpers berechnen, die außerdem von der Temperatur der Lösung aus geschmolzenem Klebstoff und Gas abhängt.

**Revendications**

1. Appareil pour commander la teneur en gaz d'un adhésif thermoplastique thermofusible distribué en mousse, comportant:

des moyens (17) pour fournir à un orifice de sortie le matériau adhésif thermoplastique chauffé à l'état fondu,

des moyens (22) pour fournir un gaz à un orifice de sortie,

des moyens (11) associés à l'orifice de sortie des moyens de fourniture de matériau adhésif et à l'orifice de sortie des moyens de fourniture de gaz, pour agiter et mettre sous pression le matériau adhésif fondu en présence du gaz pour imposer la mise en solution du gaz dans le matériau adhésif fondu et former une solution d'adhésif fondu et de gaz à un orifice de sortie (26), un distributeur (28) pouvant ainsi être associé à l'orifice de sortie des moyens d'agitation et de mise sous pression pour distribuer la solution d'adhésif fondu et de gaz à une pression réduite, de sorte que le gaz se dégage de la solution et forme une mousse d'adhésif distribuée et des moyens (24, 27; 49, 54) pour commander l'écoulement du gaz allant des moyens d'alimentation en gaz aux moyens d'agitation et de mise sous pression, caractérisé par

des moyens (36; 38; 50) pour détecter un paramètre de la solution d'adhésif fondu et de gaz indicateur de la teneur en gaz de la solution et pour produire un signal de sortie fonction dudit paramètre détecté, ledit paramètre détecté étant de préférence la différence de pression lors de l'écoulement de ladite solution à travers un orifice d'étranglement,

et des moyens (37; 44; 54) accouplés aux moyen de détection de paramètre et aux moyens d'alimentation en gaz pour actionner lesdits moyens de commande d'écoulement de gaz en fonction dudit signal de sortie des moyens de détection de paramètre.

2. Appareil selon la revendication 1, dans lequel les moyens (11) d'agitation et de mise sous pression comportent une entrée (18) reliée à l'orifice de sortie des moyens de fourniture de matériau adhésif, et comportant en outre, un parcours de recyclage (29) reliant l'orifice de sortie (26) des moyens d'agitation et de mise sous pression à l'entrée (18) de ces moyens d'agitation et de mise sous pression.

3. Appareil selon la revendication 2, qui comporte en outre des moyens (31) pour réduire la pression dans le parcours de recyclage entre l'orifice de sortie (26) des moyens d'agitation et de mise sous pression et l'entrée (18) de ces moyens d'agitation et de mise sous pression.

4. Appareil selon la revendication 3, dans lequel les moyens d'agitation et de mise sous pression comportent une pompe (11) actionnée pour pomper des quantités à volumes dosés de matériau adhésif fondu ainsi que de solution d'adhésif fondu et de gaz de l'entrée (18) à la sortie (26) des moyens d'agitation et de mise sous pression et dans lequel les moyens de détection de paramètre (36; 38; 50) comportent des moyens pour détecter un paramètre dépendant au moins en partie de débit de la solution d'adhésif et de gaz à partir dudit orifice de sortie (26).

5. Appareil selon la revendication 4, dans lequel les moyens de détection de paramètre (36; 38; 50) comportent des moyens pour détecter un paramètre dépendant du débit et de la viscosité de la solution d'adhésif fondu et de gaz formée à l'orifice de sortie des moyens d'agitation et de mise sous pression.

6. Appareil selon la revendication 1 ou 5, dans lequel les moyens de détection de paramètre (36; 38; 50) comportent des moyens pour détecter une différence de pression à la traversée d'un étranglement (41) dans le parcours d'écoulement de la solution d'adhésif fondu et de gaz.

7. Appareil selon la revendication 1, dans lequel les moyens de détection de différence de pression (36; 38; 50) comportent (a) un tampon mobile (39) traversé par un orifice (41) et disposé dans le parcours d'écoulement de la solution d'adhésif fondu et de gaz et (b) des moyens (44, 46, 47) pour produire ledit signal de sortie des moyens de détection de différence de pression fonction de la position du tampon dans le parcours d'écoulement.

8. Appareil selon la revendication 7, dans lequel les moyens de commande (24, 37; 49, 54) comportent des moyens pour comparer le signal de sortie des moyens de détection de différence de pression, indicateur de la position du tampon, avec une position désirée du tampon et pour commander les moyens de fourniture de gaz pour relier le gaz aux moyens d'agitation et de mise sous pression en fonction de ladite comparaison.

9. Appareil selon la revendication 8, dans lequel les moyens d'agitation et de mise sous pression comportent une pompe à vitesse variable et comportent en outre des moyens, accouplés aux moyens de commmande, pour calculer une position désirée du tampon en fonction de la vitesse de la pompe.

10. Procédé pour distribuer un adhésif thermoplastique thermofusible en mousse ayant une teneur en gaz commandée, comportant les étapes:

d'agitation et de mise sous pression d'un matériau adhésif thermoplastique compact à l'état fondu en présence d'un gaz pour imposer la mise en solution du gaz dans le matériau adhésif fondu et former une solution d'adhésif fondu et de gaz,

de commande de l'écoulement dudit gaz en présence du matériau adhésif, et

de distribution de la solution d'adhésif fondu et de gaz à une pression réduite, de manière que le gaz se dégage de la solution et forme une mousse d'adhésif distribuée, caractérisé par

la détection d'un paramètre de la solution d'adhésif fondu et de gaz, indicateur de la teneur en gaz de la solution, de préférence par détection d'une différence de pression à la traversée d'un étranglement dans le parcours d'écoulement de la solution d'adhésif fondu et de gaz,

et par la commande de l'écoulement dudit gaz en fonction dudit paramètre détecté.

11. Procédé selon la revendication 10, dans lequel ladite étape de commande comporte les étapes secondaires de:

comparaison dudit paramètre détecté avec un paramètre de point de réglage pour produire un signal de comparaison, et

commande de l'écoulement du gaz en fonction de ladite comparaison.

12. Procédé selon la revendication 11, qui comporte en outre, avant lesdites étapes secondaires de comparaison et de commande, l'étape de:

calcul d'un paramètre de point de réglage pour tenir compte de variables du système qui sont sensiblement indépendantes de la teneur en gaz de la solution d'adhésif fondu et de gaz.

13. Procédé selon l'une quelconque des revendications 10 à 12, dans lequel les moyens de calculs d'une position désirée du tampon, calculent une position désirée du tampon qui dépend également de la température de la solution d'adhésif fondu et de gaz.

HOT MELT SOURCE ~17

12a 18
12b 12
19
11 14 16 23 24
13a 21 V
13b 13 GAS SOURCE ~22
29 26
34 CONTROL ~37
REG. 33 FILTER ~27
31 36 SENSOR

**FIG. 1**

GUN 28
32 V

+V 48 44 49 TO PUMP II
P₁ FROM GAS SOURCE 22
46
47 m'
39
41
35
P₂
38
42
43

**FIG. 2**

DESIRED POS.
GAS VALVE CONTROL CIRCUIT 49
54 V TO PUMP II
ACTUAL POS. FROM GAS SOURCE 22
53 35 39
52 P₁ m'
41
POSITION SENSING CIRCUIT L
51
P₂
50 42
43

**FIG. 3**

FIG. 4

FIG. 5

FIG. 6          FIG. 7